# EUROPEAN PATENT APPLICATION

(11) **EP 1 986 028 A2**
(43) Date of publication of application: **29.10.2008**
(21) Application number: 08251085.0
(22) Date of filing: 26.03.2008
(51) Int. Cl.: G02B 6/42

(54) **Optical assemblies and their methods of formation**

(30) Priority: 27.03.2007 US 920515 P
(71) Applicant: Rohm and Haas Electronic Materials LLC, Marlborough, MA 01752 (US)
(72) Inventor: Hogan, William K., Merritt Island Florida 32953 (US); Gaebe, Carl E., Blacksburg Virginia 24060 (US); Getz, James W., Blacksburg Virginia 24060 (US); Sherrer, David W., Radford Virginia 24141 (US)
(74) Representative: Buckley, Guy Julian

(57) **Abstract**

Provided are optical assemblies which allow for optical and mechanical connection between an optoelectronic package and an optical receptacle. The invention finds particular applicability in the optoelectronics industry in forming micro-optical component assemblies.

## Description

This application claims the benefit of priority under 35 U.S.C. § 119(e) to U.S. Provisional Application No. 60/920,515, filed March 27, 2007, the entire contents of which are incorporated herein by reference.

The present invention relates generally to the field of optoelectronics. In particular, the present invention relates to optical assemblies which allow for optical and mechanical connection between an optoelectronic package and optical fiber connector. The invention also relates to methods of forming such optical assemblies. The invention finds particular applicability to the manufacture of micro-optical component assemblies which include a housing for an optoelectronic subassembly (OSA) such as a transmitter (TOSA), receiver (ROSA) or transceiver optical subassembly, and which can be connected with an optical fiber connector.

Optoelectronic devices such as laser diodes are used for a variety of applications, for example, in the telecommunications industry. Existing commercial TOSA optical subassemblies are manufactured using a process based on a TO-can header assembly containing a laser diode and monitor diode. A typical TO-can type package is described, for example, in U.S. Patent Application Publication No. US 2004/0240497 A1. The header assembly also has an optically transparent window or lens, allowing an optical signal to pass to or from the optoelectronic device. In order to focus the laser light into an optical receptacle, conventional TO-can TOSA packages incorporate cylindrical machined subcomponents which are aligned with each other, and welded or bonded in place.

Laser performance in terms of lifetime reliability and the ability to transmit reliable, error-free data is dependent on the operating temperature of the laser. Given the significant heat loads placed on optoelectronic packages containing a laser, and optical assemblies in which such packages are mounted, thermal management in such packages and assemblies can pose a significant challenge. Conventional TO-can hermetic packages often use KOVAR^{™} alloy, an iron-nickel alloy, as a material of construction. This material is employed for its coefficient of thermal expansion (CTE), which suitably matches that of glass and ceramics, the latter materials being typical for the electrical connections which pass into packages that need to be hermetically sealed. KOVAR alloy is typically used, as well, for its ability to be laser YAG welded in securing an optical receptacle to a TOSA base after optical alignment. This material, however, has a relatively low thermal conductivity. As such, the usefulness of KOVAR from a thermal management standpoint is limited. Thermal management issues become particularly important, for example, in the case of uncooled laser die where high frequency performance at high temperatures is particularly challenging and within system racks, routers, and switches that continue to dissipate more and more power. Additionally, the use of KOVAR alloy in forming TOSA packages can significantly increase the cost of the package as a result of the material's relatively high cost. Use of a low-cost material in an optical assembly, which would allow for the receptacle to be welded and which would provide beneficial thermal management properties, would therefore be desired.

There is currently significant infrastructure for manufacturing TO-can optical assemblies. Such manufacturing infrastructure includes, for example, YAG laser welding lines, typically used for welding the TO-can package to the fiber receptacle after active optical alignment of the fiber in the receptacle to the optoelectronic component. Laser welding allows for submicron alignment tolerances and is becoming an industry standard, particularly for single mode TOSAs. It would be desirable to provide optical assemblies and methods for their formation which would make use of such existing TO-can manufacturing infrastructure. In addition, it would be useful from an applications standpoint to be able to use such optical subassemblies as a drop-in replacement for the TO-cans due to an existing infrastructure designed around conventional TO-can assemblies.

There is thus a need in the art for improved optical assemblies and for their methods of formation which would address one or more of problems associated with the state of the art.

In accordance with a first aspect of the invention, an optical assembly is provided. The optical assembly includes: an optoelectronic package, comprising: a substrate comprising single-crystal silicon, and an optoelectronic component on the substrate; an optoelectronic package housing in which the optoelectronic package is disposed; and an optical receptacle comprising a receptacle housing; wherein the optical receptacle is fixed in relation to the optoelectronic package housing by welding.

In accordance with a further aspect of the invention, an optical assembly is provided. The optical assembly includes: an optoelectronic package, comprising a substrate and an optoelectronic component on the substrate; an optoelectronic package housing in which the package is disposed, wherein the package housing comprises a base on which the optoelectronic package is mounted, wherein the base is constructed from zinc or an alloy thereof; and an optical receptacle comprising a receptacle housing. The optical receptacle is fixed in relation to the optoelectronic package housing.

In exemplary aspects of the invention, the optical receptacle housing may be constructed from zinc or an alloy thereof. The optical receptacle may be fixed in relation to the optoelectronic package housing by laser welding. The optical assembly may further comprising an alignment sleeve disposed around the optical receptacle, wherein the alignment sleeve is laser welded to the optical receptacle and to the optoelectronic package housing wherein, prior to welding, the alignment sleeve allows for aligning the optical fiber to the optoelectronic component along a longitudinal and/or transverse direction of the optical fiber. The optical receptacle may advantageously be laser welded to the optoelectronic package housing. In other aspects, the optoelectronic package housing may further include a metal ring press-fit thereon, wherein the optical receptacle is laser welded at the metal ring. The optoelectronic package may itself hermetically sealed. The optoelectronic package housing may include a package lid on a package base, wherein the optoelectronic package is mounted to the housing base. The optoelectronic package may include a lid comprising single-crystal silicon attached to the substrate, enclosing a volume in which the optoelectronic component is disposed. The substrate of the optoelectronic package may include: a first surface and a second surface opposite the first surface, wherein the second surface has a locally thinned region therein; and a plurality of conductive micro-vias in the locally thinned region extending through the substrate to the first surface, wherein the optoelectronic device is connected to the conductive micro-via. Still further, the optical assembly may include a flex circuit attached to the optoelectronic package. Advantageously, the optical assembly may form a drop-in replacement for a TO-can optical assembly. The optical assembly may be of a dimension such that it has a diameter of 4 millimeters or less. In additional aspects, the optical receptacle is connectable and compatible with an MU or LC fiber optic connector. In further aspects, an optical isolator may be mounted to the optoelectronic package housing or the optical receptacle. In a further aspect, an optical fiber may be disposed within the receptacle housing.

In accordance with a further aspect of the invention, methods of forming optical assemblies such as described above are provided. The methods involve: (a) providing an optoelectronic package which includes a substrate comprising single-crystal silicon, and an optoelectronic component on the substrate; (b) providing an optoelectronic package housing in which the optoelectronic package is disposed; (c) providing an optical receptacle which includes a receptacle housing; (d) actively aligning the optical receptacle to the optoelectronic component; and (e) after (d), fixing the optical receptacle in relation to the optoelectronic package housing by welding.

In accordance with further aspects of the invention, methods of forming optical assemblies such as described above are provided. In one such further aspect, the methods include: (a) providing an optoelectronic package which includes a substrate comprising single-crystal silicon, and an optoelectronic component on the substrate; (b) providing an optoelectronic package housing in which the package is disposed, wherein the package housing includes a base on which the optoelectronic package is mounted, wherein the base is constructed from zinc or an alloy thereof; and (c) providing an optical receptacle which includes a receptacle housing; (d) actively aligning the optical receptacle to the optoelectronic component; and (e) after (d), fixing the optical receptacle in relation to the optoelectronic package housing.

In accordance with a further aspect of the invention, a transmitter optical subassembly (TOSA) is provided. The subassembly includes: an optoelectronic package which includes a substrate and an optoelectronic component on the substrate; an optoelectronic package housing in which the optoelectronic package is disposed; and an optical receptacle comprising a receptacle housing; wherein the subassembly has two or more of the following characteristics: (a) is suitable for operation at a data rate of 10 Gb/s or greater; (b) has a diameter of less than 4 mm and a length of less than 14 mm; or (c) has an electrical interconnection density that can support eight or more leads.

In accordance with further aspects of the invention, transceivers are provided which include an optical assembly or a TOSA as described above.

As used herein, the terms: "a" and "an" are inclusive of "one or more"; "on" and "over" are used interchangeably in defining spatial relationships, and encompass the presence or absence of intervening layers or structures; "microstructure" refers to structures formed by microfabrication or nanofabrication processes, typically but not necessarily on a wafer-level; "wafer-level" refers to processes taking place with any substrate from which a plurality of die is formed including, for example, a complete wafer or portion thereof if multiple die are formed from the same substrate or substrate portion; "metal" is inclusive of metal alloys unless specified as an elemental metal, for example, zinc metal.

The present invention will be discussed with reference to the following drawings, in which like reference numerals denote like features, and in which:
FIG. 1 illustrates an isometric view of an exemplary optical assembly in accordance with the invention;
FIG. 2 illustrates a cross-sectional view of the exemplary optical assembly shown in FIG. 1;
FIG. 3 illustrates an exploded view of the exemplary optical assembly shown in FIG. 1;
FIG. 4 illustrates an exemplary optoelectronic package contained in the optical assembly shown in FIG. 1;
FIG. 5 illustrates an isometric view of an exemplary optoelectronic package substrate of the optoelectronic package of FIG. 4;
FIG. 6A-B illustrate cross-sectional and end views of an exemplary optical assembly in accordance with the invention;
FIG. 7 illustrates a rear isometric view of an exemplary transceiver in accordance with the invention;
FIG. 8 illustrates a front isometric view of the exemplary transceiver shown in FIG. 7 in accordance with the invention;
FIG. 9 illustrates an isometric view of an exemplary TOSA and ROSA in the exemplary transceiver shown in FIG. 7; and
FIG. 10 illustrates an isometric view of an exemplary TOSA connected to a printed circuit board with a flex circuit, in accordance with the invention.

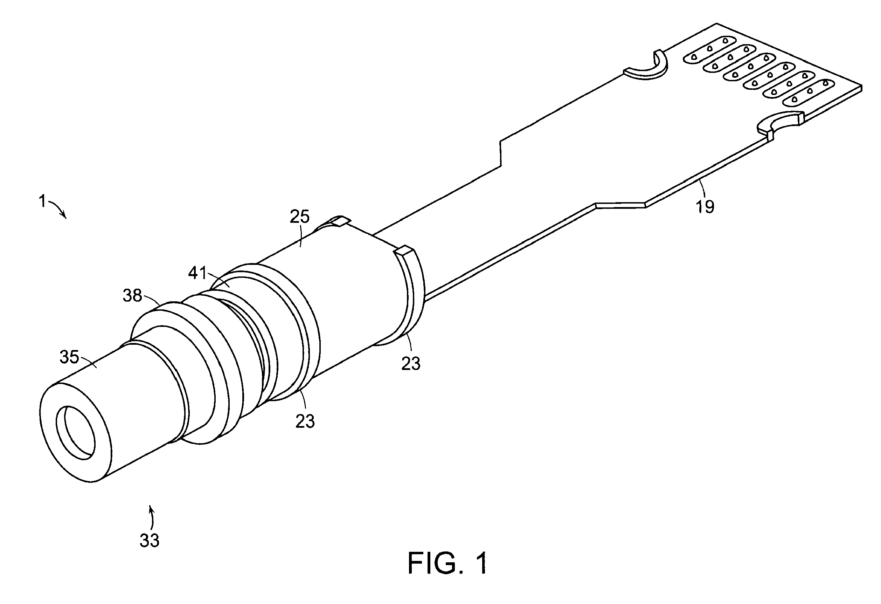

The present invention will now be described with reference to FIGS. 1-3, depicting in isometric, cross-sectional and exploded views, respectively, an exemplary TOSA optical assembly 1 in accordance with the present invention. While the illustrated optical assembly is a TOSA, it should be clear that the optical assemblies may also be applied to ROSAs as well as transceiver optical assemblies. The optical assembly 1 includes an optoelectronic package 3. The optoelectronic package includes a substrate 5 having an upper surface 7 in and/or on which various surface features are formed. The substrate 5 is typically formed from a semiconductor material which may be in wafer or chip form, such as silicon, for example, <100> single-crystal-silicon, silicon-on-insulator (SOI), gallium arsenide, indium phosphide, or lithium niobate, or from a ceramic, polymer, or metal. Typically, the substrate is formed from single-crystal silicon or single-crystal silicon-on-insulator (SOI) such as <100> single-crystal silicon. One or more optoelectronic components 2, 9 and, optionally, one or more optical components such as a ball lens 11 are bonded to the substrate upper surface 7. Typical optoelectronic devices finding use in the optoelectronic package include, for example, laser die such as edge emitting lasers, Vertical Cavity Surface Emitting Lasers (VCSELs) and pump lasers, sensors and photodetectors. The illustrated assembly includes a laser die 9 and monitor photodiode 2. Typical optical components useful in the optoelectronic package 3 include, for example, optical fibers, lenses such as ball lenses, molded glass lenses, optical filters and optical isolators. Typical electrical devices finding use in the optoelectronic package include, for example, resistors, inductors, capacitors, transimpedance amplifiers, and controlled impedance transmission lines and traces.

The substrate upper surface 7 includes one or more surface features formed therein or thereon for holding the various components. The surface features may include, for example, grooves such as V- or U-grooves for holding an optical fiber, pits 8 for holding lenses such as a ball lens and metal features for electrical connection of the optoelectronic component 9. Typical metal features include, for example, contact pads to which the optoelectronic component 9 is soldered, metal lines, metallized vias 15 and bonding pads for connection to a power supply. Grooves and pits may be formed using known masking and wet and/or dry etching techniques, while metallization structures may be formed by sputtering, evaporation, plating and/or etching techniques.

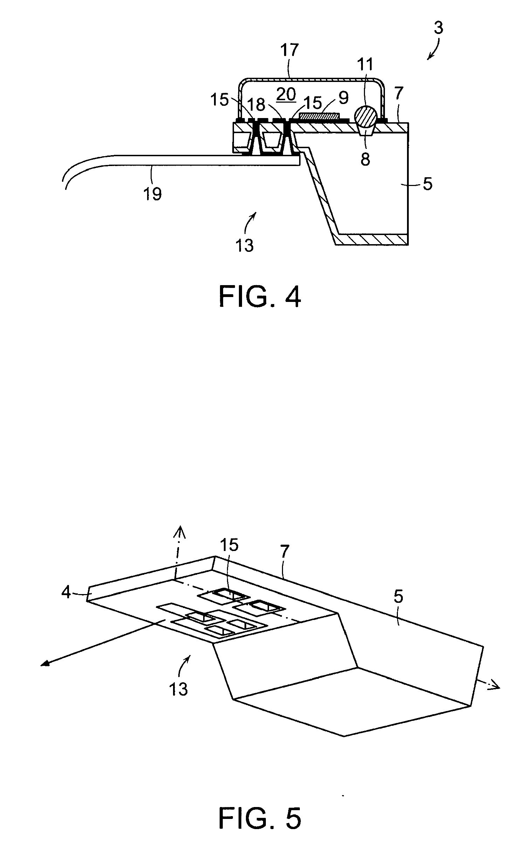

As shown in FIGS. 4-5, in the exemplified optoelectronic package 3, the substrate 5 has in a surface thereof a locally thinned region 13, metal lines 18 and a plurality of conductive micro-vias 15 in the locally thinned region extending through the substrate for providing electrical connectivity to the optoelectronic component 9 (monitor photodiode not shown). As illustrated, the optoelectronic component 9 may be disposed on the opposite surface of the substrate from the surface in which the locally thinned region and conductive vias 15 are formed. Alternatively, the electronic device may be disposed on a separate substrate which forms a lid 17 that seals to the via-containing substrate 5. The package lid 17 encloses a volume 20 in which the optoelectronic component 9 is disposed, which volume is typically hermetically sealed. The lid may be formed from the materials described above. The lid or other portion of the package includes an optical feedthrough such as a window or portion of the lid material itself, allowing light to pass into and/or out of the package. Typically, the lid 17 is formed from single-crystal silicon or single-crystal silicon-on-insulator (SOI) such as <100> single-crystal silicon, such that both the lid and substrate may be formed from a single-crystal silicon material.

Electrical connection to the optoelectronic package 3 may be accomplished by any known means. In the exemplified embodiment, a flex circuit 19 is provided for this purpose, although another suitable carrier such as a ceramic or fiberglass wiring board may be employed. Bonding pads 21 of the flex circuit are soldered to corresponding ball grid array solder sites on the underside of the optoelectronic package 3, which are electrically connected to the conductive micro-vias 15 and to the optoelectronic device 9. The combination of micro-vias and solder balls provide a dense electrical interconnection structure, allowing for a compact OSA having up to 12 or more electrical connections.

With reference again to FIGS. 1-3, an optoelectronic package base 23 is provided on which the optoelectronic package 3 is disposed. The package base may be constructed, for example, of machined, molded such as injection molded, die cast, metal injection molded, or stamped and formed metals and alloys or plastics, including thermally conductive plastics. Advantageously, the package base may be constructed of zinc or an alloy thereof, for example, a zinc-aluminum alloy such as ZA-8 alloy (8 wt% Al). For purposes of enhancing solderability, it may be desired to coat the package base 23 and/or other parts of the package housing with one or more metal layers such as nickel overcoated with gold, or copper overcoated with nickel overcoated with gold, or other suitable coatings or platings. The use of zinc or a zinc alloy as described above in the package base 23 and various other components of the optical assemblies of the invention is advantageous in that it provides a low-cost material having excellent heat transfer and mechanical (e.g., strength and rigidity) properties. For example, the thermal conductivity of ZA-8 zinc alloy is about 115 W/mK versus only 17 W/mK in the case of KOVAR alloy. Further, typical zinc alloys may be die-cast, adding to the low cost of the formed parts, and are laser weldable.

An optoelectronic package cover 25 is provided for enclosing the optoelectronic package 3 to provide protection from handling and/or from environmental factors. The cover 25 may be formed of the materials described above with respect to the package base, and is typically formed from a stamped and formed metal that is attached to the package base 23. The package base 23 and cover 25 may be formed from the same or different materials. The cover 25 is typically formed of stainless steel, zinc or an alloy thereof. Attachment may be by snap-fitting the cover 25 to the base 23, or by other technique such as soldering or bonding techniques.

The package base 23 and package cover 25 form a housing for the optoelectronic package 3. Essentially, an optoelectronic package within a package is provided. The package housing provides one or more functions including, for example, alignment when assembling the optical assembly, heat sinking to remove unwanted heat generated by the optoelectronic device, strain relief to relieve stress from the flex circuit 19, mechanical protection for the optoelectronic package 3, mounting capability to a printed circuit board or other electronic substrate and thermal isolation to prevent solder reflow in earlier-formed solder joints during later soldering processes. The optoelectronic package housing may take the form of a monolithic structure or, as illustrated in the exemplary structure, a plurality of pieces such as package base 23 and cover 25.

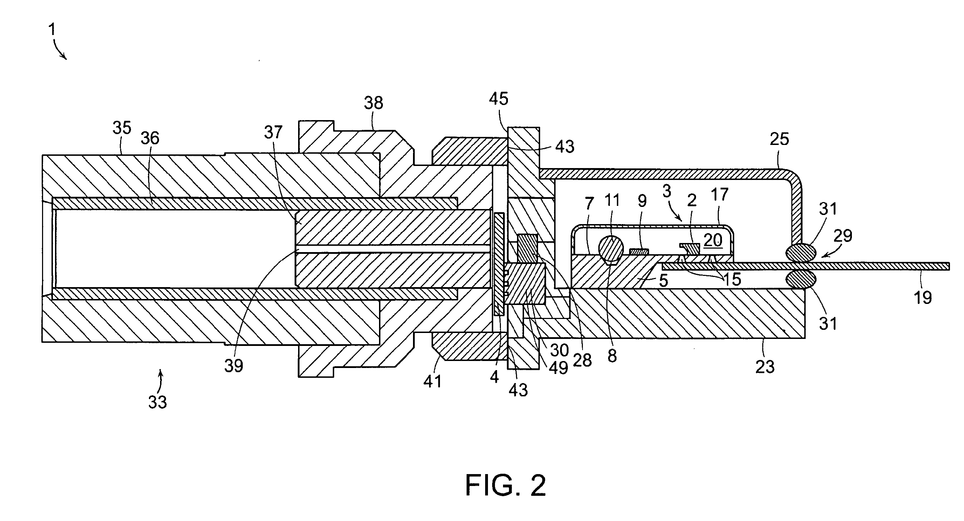

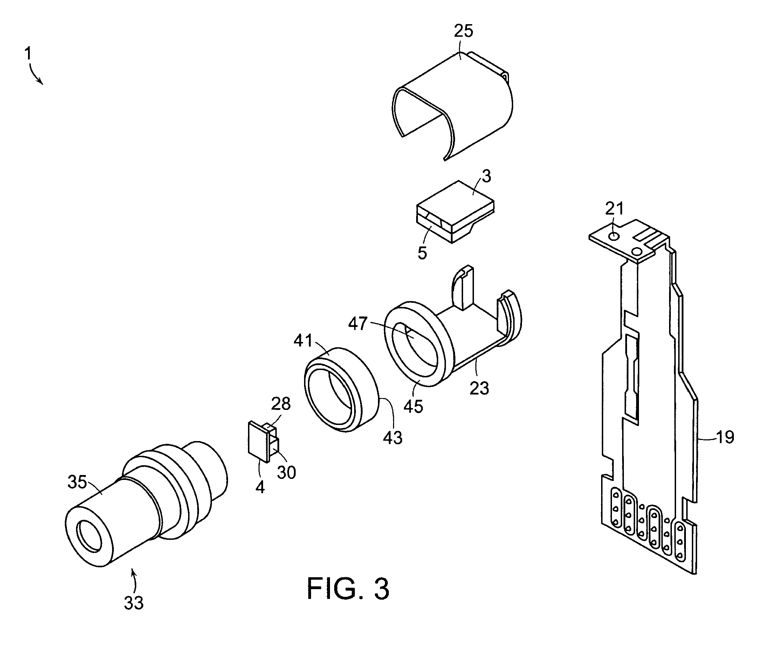

The optical package housing may optionally include provision for holding one or more components, such as one or more of the above-described optical components (e.g., optical fibers, lenses such as ball lenses, filters and optical isolators 49). Such a structure may allow for a package having a smaller footprint and/or provide improved manufacturability. FIGS. 2 and 3, for example, illustrate an optical isolator 49 including garnet 28, magnet 30 and isolator substrate 4 integrated on the package housing. The optical isolator 49 or other optical component as described above may optionally be mounted to another portion of the optical assembly, for example, to an optical receptacle 33 such as a ferrule receptacle.

The optoelectronic package housing may include an opening, for example, a slot 29, through which the flexible circuit 19 passes into the hermetic enclosure. The slot 29 in the exemplified structure is formed by an opening between the package base 23 and cover 25. Open areas of the slot 29 around the flex circuit 19 may be sealed, for example, with an epoxy or adhesive 31. Such a seal allows for provision of a hermetic enclosure, and may further provide a strain relief for the flexible circuit to protect delicate solder connections.

The optical assemblies of the invention further include an optical receptacle 33. The optical receptacle is provided for optically and mechanically mating to an optical connector (not shown), for example, an optical fiber connector containing an optical fiber ferrule. The optical connector may be attached, for example, to an optical fiber pigtail. As illustrated, the optical receptacle 33 may be an optical ferrule receptacle, but is not limited thereto. As illustrated, the optical receptacle 33 includes a receptacle housing 35, which is constructed of a metal on the outside, and typically contains a split ceramic sleeve 36 to align with the optical connector. The receptacle housing 35 may, for example, be constructed of stainless steel or, advantageously, from zinc or an alloy thereof, for example, a zinc-aluminum alloy such as ZA-8 alloy. It may be desired to coat the housing or portions thereof with one or more metal layers such as nickel overcoated with gold, copper overcoated with nickel, or other suitable coatings or platings. The optical receptacle 33 may contain a double sided polished ferrule stub 37 with a length of optical fiber stub 39 in it, such as those commercially available, for example, from Kyocera Corporation. It is further envisioned that the optical receptacle is one which does not contain a ferrule or fiber. The optical housing may, for example, contain an optical element other than a fiber such as a lens for focusing or collimating light in the optical receptacle.

The optical receptacle 33 may be connected directly or indirectly to the package housing. In the illustrated optical assembly 1, indirect connection between the receptacle 33 and package housing is provided by a Z-sleeve 41. The Z-sleeve is provided to allow active optical alignment between the optical receptacle and the optoelectronic component 9 along the longitudinal axis of the optical receptacle 33. The optical receptacle and the Z-sleeve are in sliding engagement with each other along this longitudinal axis until being fixed to each other, for example, by laser welding. A surface 43 of the Z-sleeve on the side opposite the optical receptacle is provided for mating to a surface 45 of the package housing. In the exemplified structure, the mating surface 45 is on the substrate base portion of the package housing, and has a ring-shape with an aperture 47 provided to allow for passage of optical signals. Surface 43 of the Z-sleeve is in sliding contact with and movable transversely (in the x-y direction) with respect to the mating surface 45 of the package housing, until being fixed to each other, for example, by laser welding. The optical assembly further may include a window, typically of glass, in the optical path between the package housing and optical receptacle. Although the exemplary assembly is shown in cylindrical form, it should be clear that other shapes such as rectangular, and combinations thereof may be used.

The optical assembly 1 may further include surface features which allow for passive alignment between various components. For example, alignment pins for passively locating the flex circuit 19, and a trench and/or elevated regions in the package base 23 for passively locating the optical package 3 may be provided.

As described above, the use of zinc or a zinc alloy, for example, a zinc-aluminum alloy such as ZA-8 alloy, to fabricate the optoelectronic package base 23, cover 25, optical housing including receptacle 33 and other parts of the optical assembly provides various advantages, such as its low-cost and excellent thermal conductivity in comparison to KOVAR alloy. Exemplary other components of the described optical assemblies which may be manufactured from zinc and zinc alloys include receptacle parts such as receptacle housing 35 and receptacle retainer 38 that hold the ceramic sleeve 36 and fiber ferrule 37 containing fiber stub 39 together and comprise the optical ferrule receptacle, alignment sleeves such as the Z-sleeve 41, and the like. The ability to form such parts form zinc or alloys thereof may result in significant cost savings both in terms of material cost and fabrication cost associated, for example, with zinc die casting.

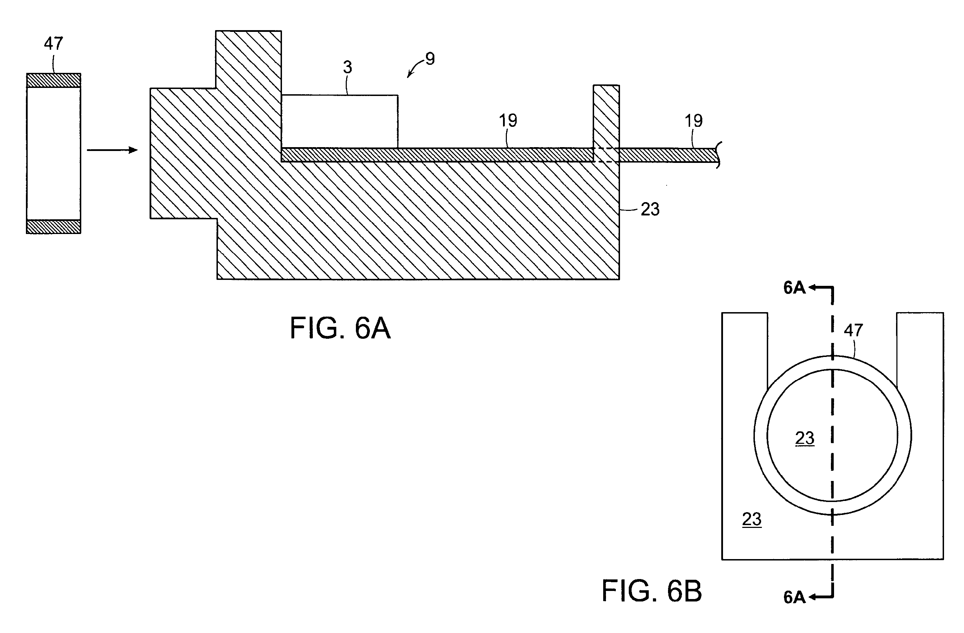

FIG. 6A-B illustrates cross-sectional and end views of an exemplary optical assembly in accordance with a further aspect of the invention. In this assembly, the optoelectronic package base 23 may be formed from zinc, copper, alloys thereof, or other material compatible with metal-injection-molding (MIM) or die casting which exhibits good thermal conductivity properties. Such material would desirably also have a low cost. As described above, one or more metal coatings or platings may be provided for solderability purposes. Where desired to use a higher costing material for laser welding, a ring 47 of a laser weldable material, for example, KOVAR alloy or stainless steel, may be affixed to the surface of the optoelectronic package base 23 to which the optical receptacle is to be welded. The ring 47 may, for example, be press-fit onto the package base 23. In this way, material volume for the more expensive weldable material can be minimized, thus reducing material cost while providing a low cost weldable package housing. Such a ring structure may be used as well for other components of the optical assembly which are to be welded.

Optical assemblies of the invention may advantageously be optically aligned and welded, for example, by YAG laser welding using existing TO-can infrastructure. For example, in the case of the above-described optical assemblies of FIGS. 1-3, the optical receptacle 33 is movable along its longitudinal axis (z-direction) with respect to the optoelectronic component 9, while the receptacle together with the Z-sleeve 41 can slide transversely along the face 45 of the optoelectronic package housing in the xy-direction. After actively aligning the optical receptacle in the z-direction, the receptacle may be laser-welded to the Z-sleeve 41. Next, the receptacle and Z-sleeve 41 may be actively aligned in the x-y direction and, once aligned, the Z-sleeve 41 may be laser-welded to the package housing surface 45.

Operation of the exemplified optical assembly will now be described with reference to FIGS. 1 and 4. Using a TOSA device 1 as an example, transmit data signals propagate along transmission lines of the flex circuit 19, through solder connections connecting the flex circuit to the underside of the optoelectronic package substrate 5, through micro-vias 15, along transmission lines 18 disposed on the upper surface 7 of the package substrate, and to the optoelectronic device 9 such as a laser diode. The modulated laser optical signal is collected by lens 11, focused and coupled into a fiber stub 39 in ceramic ferrule 37 of optical receptacle 33 for connection with a mating ferrule (not shown) that would be inserted into the receptacle 33 to mate with ferrule 37.

In accordance with further aspects, the invention allows for the manufacture of a compact, reduced size TOSA, suitable for operation at high data rates, for example, at 10 Gb/s or higher, for example, from 25 to 40 Gb/s, and having a diameter, for example, of less than 4 mm and a length, for example, of less than 14 mm. Further, the optical assemblies may have an electrical interconnection density that can support up to twelve or more leads. The TOSA may be used within high data rate small form factor transceiver, such as the emerging SFP+ form factor. The compact TOSA may optionally be employed as a higher data rate drop-in replacement for single mode TOSAs that are currently used within SFP type transceivers at lower data rates.

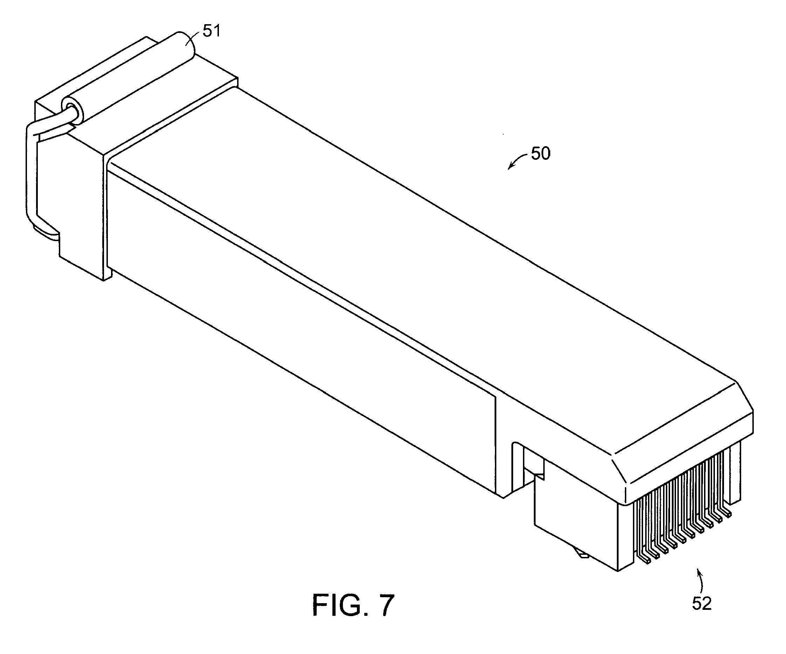

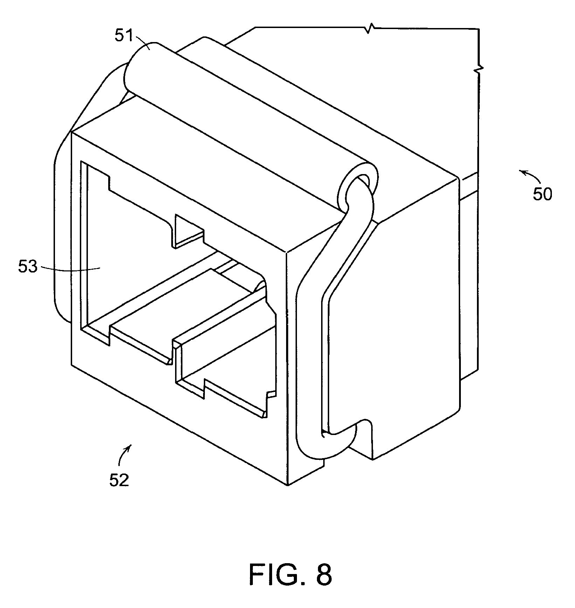

The optical assemblies of the invention allow for an increase in optical port density. For example, FIG. 7 depicts a rear isometric view of an exemplary transceiver 50 in accordance with the invention. The transceiver incorporates a compact TOSA utilizing a narrow MU fiber optic connector. The transceiver includes a typical bail latching mechanism 51 and hot pluggable connector 52. The transceiver may have a transmitter to receiver optical port 53 pitch of, for example, 4.5 mm and a width of 11.2 mm (see Telecommunications Industry Association document TIA-604-17, "Fiber Optic Connector Intermateability Standard, Type MU"). FIG. 8 illustrates a front isometric view of the same transceiver 50 illustrated in FIG. 7. As SFP transceiver widths are typically 13.5 mm, the MU device increases linear port density by about 17%. Further improvements in area density may be realized by a reduction in transceiver height.

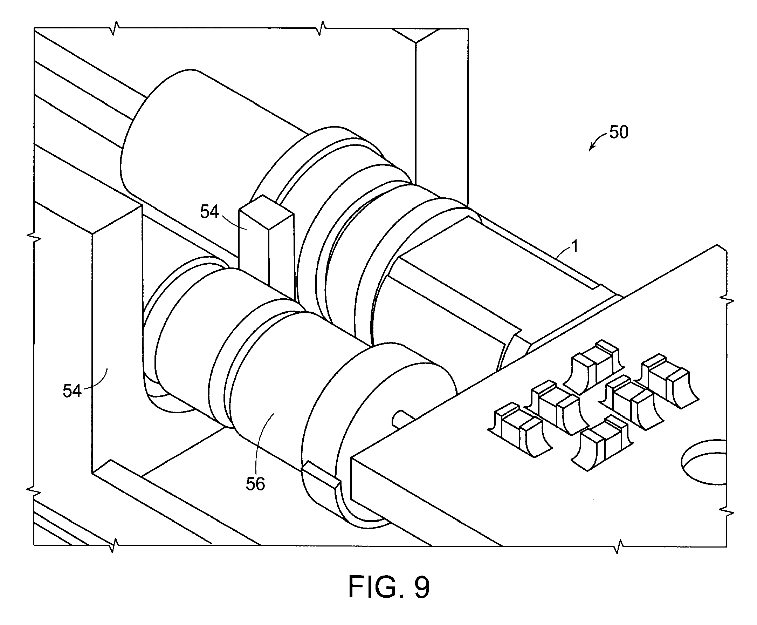

FIG. 9 illustrates an isometric view the above-described optical assembly 1 mounted in the MU-based transceiver 50. The transceiver incorporates cradles 54 that locate the TOSA 1 and ROSA 56 laterally and along the optical axis.

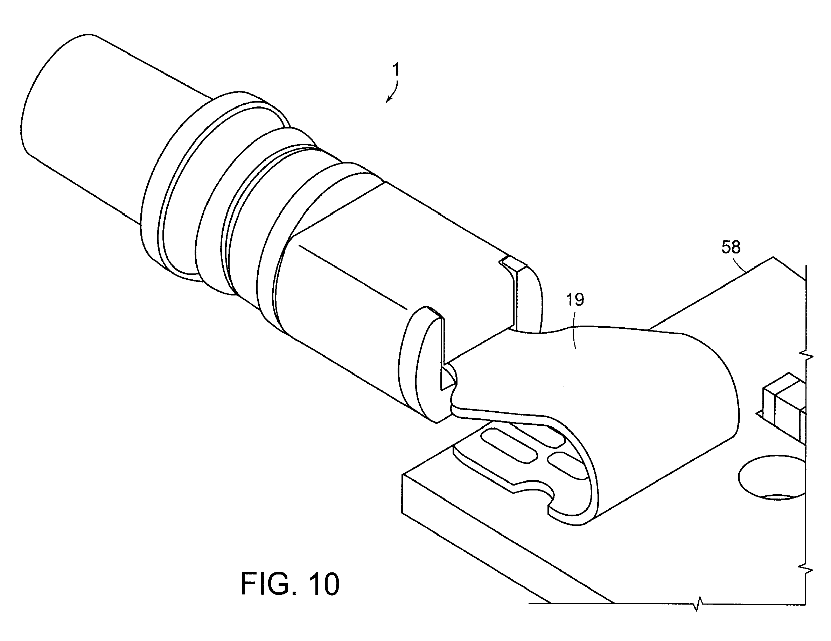

FIG. 10 illustrates connection of an optical assembly 1 as described above into an MU transceiver 50 through flexible circuit 19 to the transceiver printed circuit board (PCB) 58 in a configuration that can maximize the usable PCB area, for example, by minimizing the distance from the PCB edge to the back of the TOSA 1. In this device, electrical signals originate with the laser driver integrated circuit on the PCB, propagate to the flexible circuit 19, to the silicon package 5, and through the micro-vias 15, across transmission lines 18, to drive the laser 9.

While the invention has been described in detail with reference to specific embodiments thereof, it will be apparent to one skilled in the art that various changes and modifications can be made, and equivalents employed, without departing from the scope of the claims.

## Claims

1. An optical assembly, comprising:
an optoelectronic package, comprising: a substrate comprising single-crystal silicon, and an optoelectronic component on the substrate;
an optoelectronic package housing in which the optoelectronic package is disposed; and
an optical receptacle comprising a receptacle housing;
wherein the optical receptacle is fixed in relation to the optoelectronic package housing by welding.

2. An optical assembly, comprising:
an optoelectronic package, comprising a substrate and an optoelectronic component on the substrate;
an optoelectronic package housing in which the package is disposed, wherein the package housing comprises a base on which the optoelectronic package is mounted, wherein the base is constructed from zinc or an alloy thereof; and
an optical receptacle comprising a receptacle housing;
wherein the optical receptacle is fixed in relation to the optoelectronic package housing.

3. The optical assembly of claim 1 or 2, wherein the optical receptacle housing is constructed from zinc or an alloy thereof.

4. The optical assembly of any of claims 1-3, further comprising an alignment sleeve disposed around the optical receptacle, wherein the alignment sleeve is laser welded to the optical receptacle and to the optoelectronic package housing, wherein the alignment sleeve allows for aligning the optical fiber to the optoelectronic component, prior to welding, along a longitudinal and/or transverse direction of the optical fiber.

5. The optical assembly of any of claims 1-4, wherein the optical receptacle is laser welded to the optoelectronic package housing.

6. The optical assembly of any of claims 1-5, wherein the optoelectronic package housing further comprises a metal ring press-fit thereon, wherein the optical receptacle is laser welded at the metal ring.

7. The optical assembly of any of claims 1-6, further comprising an optical isolator mounted to the optoelectronic package housing or the optical receptacle.

8. The optical assembly of any of claims 1-7, wherein the optoelectronic package housing comprises a package lid on a package base, wherein the optoelectronic package is mounted to the housing base.

9. A transceiver, comprising the optical assembly of any of claims 1-8.

10. A transmitter optical subassembly, comprising:
an optoelectronic package, comprising a substrate and an optoelectronic component on the substrate;
an optoelectronic package housing in which the optoelectronic package is disposed; and
an optical receptacle comprising a receptacle housing;
wherein the subassembly has two or more of the following characteristics:
(a) is suitable for operation at a data rate of 10 Gb/s or greater;
(b) has a diameter of less than 4 mm and a length of less than 14 mm; or
(c) has an electrical interconnection density that can support five or more leads.
